**Europäisches Patentamt**

**European Patent Office**

**Office européen des brevets**

(19)

(11) **EP 1 598 746 A2**

(12) **EUROPEAN PATENT APPLICATION**

(43) Date of publication:
**23.11.2005 Bulletin 2005/47**

(51) Int Cl.7: **G06F 13/42**

(21) Application number: **05102654.0**

(22) Date of filing: **04.04.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (71) Applicant: **KABUSHIKI KAISHA TOSHIBA**<br>**Tokyo 105-8001 (JP)**<br><br>(72) Inventor: **Yashima, Daisuke**<br>**Minato-ku, Tokyo 105-8001 (JP)** |
| (30) Priority: **20.05.2004 JP 2004150657** | (74) Representative: **Henkel, Feiler & Hänzel**<br>**Möhlstrasse 37**<br>**81675 München (DE)** |

(54) **Data processing apparatus and flow control method**

(57)    A data processing apparatus includes a first device (22), a second device (21) which communicates with the first device (22), a receiving buffer (101) which is provided in the second device (21) and holds packets transmitted from the first device (22), each of the packets being either one packet including a header and variable-length data or an another packet including a header and not data, a counting unit (202, 203) which is provided in the second device (21) and counts a first value indicative of a size of a processed header and a second value indicative of a size of processed data based on a size of each of a header and data included in each of the packets output from the receiving buffer (101), and a flow control information transmission unit (205, 206) which is provided in the second device (21) and transmits flow control information, which indicates a size of each of a header and data that are receivable by the second device (21), to the first device (22) when the first value or the second value reaches a corresponding reference value.

FIG. 3

EP 1 598 746 A2

## Description

The present invention relates to a data processing apparatus such as a computer and a communication device and a method of performing flow control used in the data processing apparatus.

A third-generation general-purpose I/O interconnect interface called a PCI EXPRESS has recently been noted in a data processing apparatus such as a computer, a communication device and audio video equipment. The PCI EXPRESS is a standard for interconnecting devices via a serial interface and defined by the peripheral component interconnect special interest group (PCI SIG). In the PCI EXPRESS, information is transferred between devices using packets. In order to meet various transactions such as a memory write request, a memory read request, an I/O write request and an I/O read request, not only packets including a header and variable-length data, but also packets including only a header and not data are used in the PCI EXPRESS. For example, a memory read request packet that makes a memory read request and an I/O read request packet that makes an I/O read request each include only a header.

Credit-based flow control is used in the PCI EXPRESS. In this flow control, a receiving device previously notifies a transmitting device of a credit indicative of the size of an effective receiving buffer in the receiving device as flow control information. The transmitting device can transmit information for the size specified by the credit. In the PCI EXPRESS, for example, a timer can be used as a method for transmitting credits regularly from the receiving device to the transmitting device.

In the above method, however, a credit is transmitted from the receiving device to the transmitting device whenever the value of the timer reaches a timeout time during which period the transmitting device has credits enough to transmit information freely. The band of communications between the devices is therefore consumed by wasted transmission of credits. The shorter the timeout time, the larger the band consumed by the transmission of credits. If the timeout time is considerably longer, the transmitting device will be short of credits and thus cannot transmit information to the receiving device.

Jpn. Pat. Appln. KOKAI Publication No. 9-205442 discloses in paragraph 0007 a flow control technique that whenever a given space is generated in a receiving buffer, a credit indicative of the size of the space is transmitted to a transmitting device. However, the flow control of this publication is adapted to an asynchronous transfer mode (ATM) network using fixed-length packets and makes no distinction between a header and data.

In a system using both a packet including a header and variable-length data and a packet including only a header, flow control that makes a distinction between a header and data needs to be achieved to prevent a receiving buffer from being occupied by packets including data of large size.

An object of the present invention is to provide a data processing apparatus and a flow control method capable of performing flow control which distinguishes between a header and data and transmitting flow control information to a transmitting device at appropriate timing.

According to an embodiment of the present invention, there is provided a data processing apparatus comprising a first device, a second device which communicates with the first device, a receiving buffer which is provided in the second device and holds packets transmitted from the first device, each of the packets being either one packet including a header and variable-length data or an another packet including a header and not data, a counting unit which is provided in the second device and counts a first value indicative of a size of a processed header and a second value indicative of a size of processed data based on a size of each of a header and data included in each of the packets output from the receiving buffer, and a flow control information transmission unit which is provided in the second device and transmits flow control information, which indicates a size of each of a header and data that are receivable by the second device, to the first device when the first value or the second value reaches a corresponding reference value.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a block diagram showing a system configuration of a data processing apparatus according to an embodiment of the present invention;

FIG. 2 is a block diagram showing an interconnection between devices provided in the data processing apparatus according to the embodiment of the present invention;

FIG. 3 is a block diagram showing a configuration of a flow control unit provided in each of the devices in the data processing apparatus according to the embodiment of the present invention;

FIG. 4 is a block diagram showing a configuration of a receiving flow control update unit provided in the flow control unit shown in FIG. 3;

FIG. 5 is a chart showing a structure of a packet transferred between the devices in the data processing apparatus according to the embodiment of the present invention;

FIG. 6 is a flowchart illustrating a flow control operation performed by the data processing apparatus according to the embodiment of the present invention;

FIG. 7 is a block diagram showing another configuration of the flow control unit provided in each of the devices in the data processing apparatus according to the embodiment of the present invention;

FIG. 8 is a flowchart illustrating another flow control operation performed by the data processing apparatus according to the embodiment of the present invention;

FIG. 9 is a block diagram showing another configuration of the receiving flow control update unit provided in the flow control unit shown in FIG. 3 or FIG. 7; and

FIG. 10 is a flowchart illustrating still another flow control operation performed by the data processing apparatus according to the embodiment of the present invention.

An embodiment of the present invention will be described with reference to the accompanying drawings.

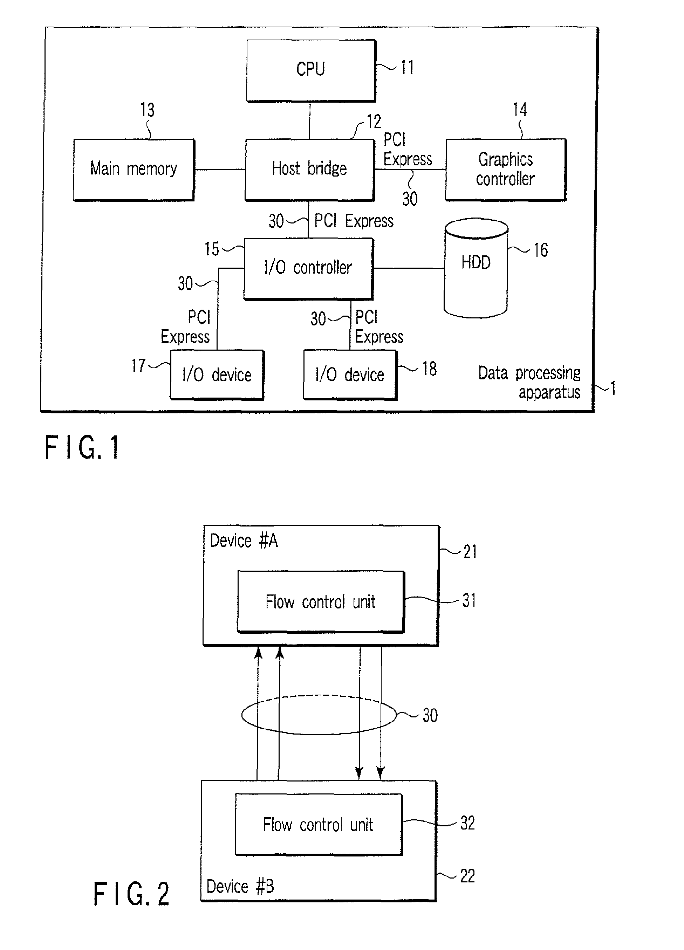

FIG. 1 shows a system configuration of a data processing apparatus 1 according to the embodiment of the present invention.

The data processing apparatus 1 functions as a computer, a communication device, audio video equipment or the like. Assume here that the apparatus 1 is implemented as a computer.

The data processing apparatus 1 includes a central processing unit (CPU) 11, a host bridge 12, a main memory 13, a graphics controller 14, an I/O controller 15, a hard disk drive (HDD) 16 and I/O devices 17 and 18, as shown in FIG. 1. The CPU 11 is a processor for controlling an operation of the apparatus 1. The processor executes various programs (operating system and application programs) that are loaded into the main memory 13 from the HDD 16. The host bridge 12 is a bridge device for bridging the CPU 11 and I/O controller 15. The bridge device has a function of communicating with the graphics controller 14 and includes a memory controller for controlling the main memory 13. The I/O controller 15 controls the I/O devices 17 and 18 under the control of the CPU 11. The I/O controller 15 includes an integrated drive electronics (IDE) controller for controlling the HDD 16.

The host bridge 12, graphics controller 14, I/O controller 15 and I/O devices 17 and 18 are devices (components) that comply with the PCI EXPRESS. The host bridge 12 and graphics controller 14 communicate with each other via a PCI EXPRESS link 30 provided therebetween. Similarly, the host bridge 12 and I/O controller 15 communicate with each other via a PCI EXPRESS link 30 provided therebetween. Further, the I/O controller 15 and each of the I/O devices 17 and 18 communicate with each other via a PCI EXPRESS link 30 provided therebetween.

FIG. 2 shows an interconnection between two devices (#A) 21 and (#B) 22 that comply with the PCI EXPRESS. A combination of these devices (#A) 21 and (#B) 22 corresponds to that of the host bridge 12 and graphics controller 14, that of the host bridge 12 and I/O controller 15, or that of the I/O controller 15 and each of the I/O devices 17 and 18.

The devices (#A) 21 and (#B) 22 are interconnected to each other via the PCI EXPRESS link 30. The PCI EXPRESS link 30 is a serial interface (serial bus) for connecting the devices (#A) 21 and (#B) 22 in point-to-point fashion. The PCI EXPRESS link 30 includes a differential signal line pair for transmitting information from the device (#A) 21 to the device (#B) 22 and a differential signal line pair for transmitting information from the device (#B) 22 to the device (#A) 21. The transmission of information between the devices (#A) 21 and (#B) 22 via the PCI EXPRESS link 30 is performed using packets.

Various transactions such as a memory write request, a memory read request, an I/O write request and an I/O read request are all transmitted between the devices (#A) 21 and (#B) 22 using packets.

The devices (#A) 21 and (#B) 22 include flow control units 31 and 32, respectively, to implement flow control for information transmitted between the devices (#A) 21 and (#B) 22. The flow control unit 31 of the device (#A) 21 transmits a credit value indicative of the size of an effective receiving buffer in the device (#A) 21 to the flow control unit 32 of the device (#B) 22 as flow control information. The device (#B) 22 can transmit to the device (#A) 21 information corresponds to the size indicated by the credit value sent from the device (#A) 21. Similarly, the flow control unit 32 of the device (#B) 22 sends a credit value indicative of the size of an effective receiving buffer in the device (#B) 22 to the flow control unit 31 of the device (#A) 21 as flow control information. The device (#A) 21 can transmit to the device (#B) 22 information corresponds to the size indicated by the credit value sent from the device (#B) 22.

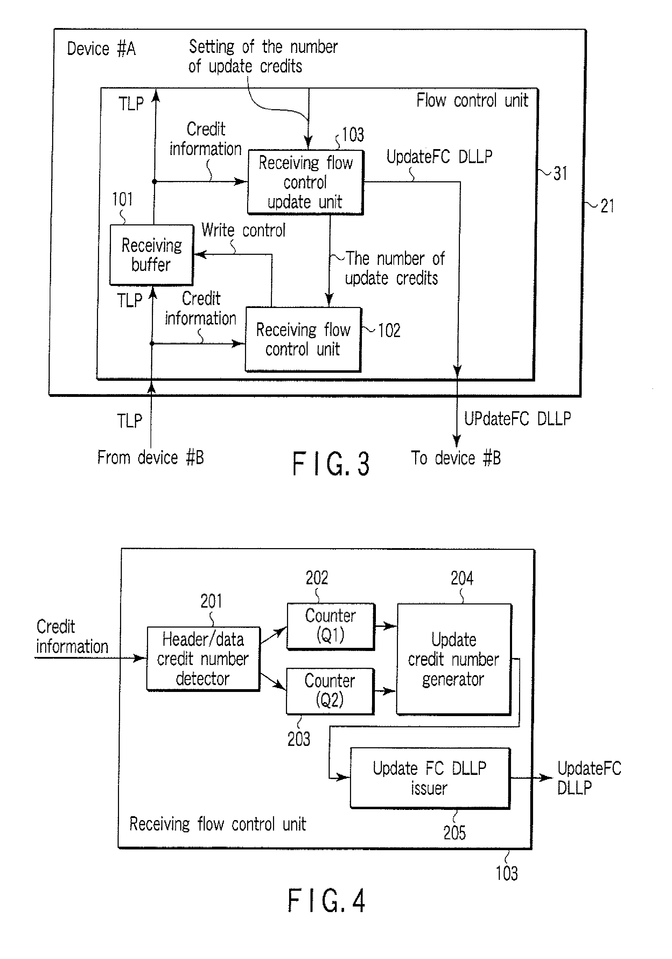

The configuration of the flow control unit provided in each of the devices will be described with reference to FIG. 3. The flow control unit 31 of the device (#A) 21 is shown as a typical one in FIG. 3.

The function of each of the devices that comply with the PCI EXPRESS is categorized into three layers of a transaction layer, a data link layer and a physical layer. The flow control is implemented by the transaction layer. The flow control unit 31 functions as a transaction layer.

The flow control unit 31 includes a receiving buffer 101, a receiving flow control unit 102 and a receiving flow control update unit 103, as shown in FIG. 3.

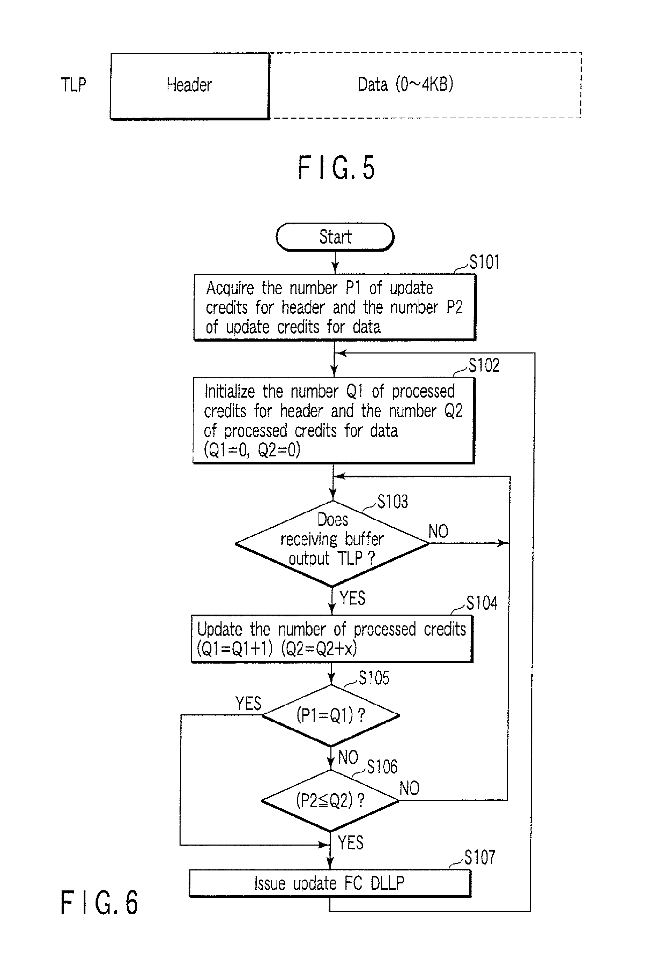

The receiving buffer 101 holds a packet (transaction layer packet TLP) received from the device (#B) 22. As shown in FIG. 5, the transaction layer packet TLP includes a header and necessary data (data payload). The size of the header is twelve bytes or sixteen bytes. The size of the data is variable, and its minimum size is zero byte and its maximum size is four kilobytes. In other words, the TLP is a packet including a header and not data or a packet including both a header and data. The flow control of the TLP is carried out in units of credit. One credit is sixteen bytes.

For example, a memory read request packet that makes a memory read request, an I/O read request packet that makes an I/O read request, and a configuration read request packet that makes a configuration read request each includes only a header and not a data payload. For example, a memory write request packet that makes a memory write request includes both a header and a variable-length data payload.

The flow control information transmitted from the flow control unit 31 of the device (#A) 21 to the device (#B) 22 contains a credit value indicative of the size of a receivable header and a credit value indicative of the size of receivable data. The credit value is referred to as a credit number (which means the number of credits). The flow control information is transmitted using a data link layer packet DLLP generated by the data link layer.

The header of the TLP includes a plurality of fields having information necessary to determine the objective and feature of the TLP. The header of the TLP also includes a field indicative of the size of a subsequent data payload.

When the device (#A) 21 is initialized, the flow control unit 31 transmits flow control information including an initial credit value indicative of the size of the effective receiving buffer 101 to the device (#B) 22 at the other end using a flow control DLLP (FC DLLP). The flow control information includes a credit number indicative of the size of a receivable header and a credit number indicative of the size of receivable data. The device (#A) 21 can transmit the headers and data corresponding to the header and data sizes designated by the flow control information.

The receiving flow control unit 102 refers to the header of the TLP received from the device (#B) 22 and acquires the size of each of a header and data included in the received TLP as credit information. The unit 102 carries out write control to permit the received TLP to be written to the receiving buffer 101 or inhibit it from being written thereto in order to prevent the receiving buffer 101 from overflowing. This write control is done based on the header and data sizes which are permitted to be sent to the device (#B) 22 by the flow control information and the header and data sizes of the received TLP.

The receiving flow control update unit 103 acquires the size of each of a header and data included in the TLP output from the receiving buffer 101 as credit information, based on the content of the header included in the TLP. Then, the unit 103 counts the size of the processed header and that of the processed data based on the acquired credit information. The unit 103 transmits update flow control information to the device (#A) 21 using an update flow control DLLP (UpdateFC DLLP) when the number of credits corresponding to the size of the processed header reaches the number P1 of update credits for header, or when the number of credits corresponding to the size of the processed data reaches the number P2 of update credits for data. The number P1 and the number P2 are set by software. The UpdateFC DLLP is a kind of data link layer packet DLLP generated by the data link layer. The update flow control information includes a new credit number (which means the number of updated header credits) indicative of the size of a header that can be received by the device (#A) 21 and a new credit number (which means the number of updated data credits) indicative of the size of data that can be received by the device (#A) 21. The number of updated header credits and that of updated data credits are supplied to the receiving flow control unit 102.

FIG. 4 shows a configuration of the receiving flow control update unit 103. The unit 103 includes a header/data credit number detector 201, a header processed-credit number counter 202, a data processed-credit number counter 203, an updated-credit number generator 204 and an UpdateFC DLLP issuer 205.

The header/data credit number detector 201 analyzes the header included in the TLP output from the receiving buffer 101 and detects the number of credits of each of the header and data included in the TLP. In any TLPs, the number of credits of the header is always one. On the other hand, the number of credits of data depends on the size of the data included in the TLP. The header processed-credit number counter 202 counts the number Q1 of processed credits for header. The number Q1 is a value that indicates in units of credit the total size of the processed headers output from the receiving buffer 101 up to now. Since the number of credits of the header included in one TLP is always one, the number Q1 is incremented by one each time the receiving buffer 101 outputs a TLP. In other words, the number Q1 coincides with the number of processed TLPs. The data processed-credit number counter 203 counts the number Q2 of processed credits for data. The number Q2 is a value that indicates in units of credit the total size of the processed data output from the receiving buffer 101 up to now. The number of credits of data included in one TLP is variable. Each time the receiving buffer 101 outputs a TLP, the number Q2 is incremented by the number of credits corresponding to the size of data included in the TLP.

The updated-credit number generator 204 operates to calculate the number of update header credits and the number of update data credits when one of the following events occurs: the number Q1 of processed credits for header reaches the number P1 of update credits for header and the number Q2 of processed credits for data reaches a value that is not smaller than the number P2 of update credits for data. For example, the calculated number of update header credits coincides with the current number Q1 of processed credits for header and the calculated number of update data credits coincides with the current number Q2 of processed credits for data. The UpdateFC DLLP issuer 205 issues flow control information including the number of update header credits and the number of update data credits calculated by the generator 204 as an UpdateFC DLLP, and transmits it to the device at the other end.

An operation of the flow control unit 31 will be described with reference to the flowchart shown in FIG. 6.

First, the flow control unit 31 acquires the number P1 of update credits for header and the number P2 of update credits for data from software (step S101). These numbers P1 and P2 are held in, e.g., a register in the unit 31 and used as reference values to determine the timing of generation of an UpdateFC DLLP. Then, the unit 31 initializes the numbers Q1 and Q2 to set them to zero (step S102).

The transaction layer of the device (#A) 21 reads TLPs in sequence from the head of the receiving buffer 101 and process the TLPs in sequence. When the TLP is processed, read/write access is gained to the memory and register in the device (#A) 21. When one TLP is read out of the receiving buffer 101 (YES in step S103), the flow control unit 31 updates the numbers Q1 and Q2 based on the number of credits of each of the header and data included in the TLP (step S104). The number Q1 is incremented by one, and the number Q2 is incremented by the number of credits of the data included in the TLP. If the TLP includes no data, the number Q2 is not updated.

The flow control unit 31 generates flow control information including the number of update header credits and the number of update data credits as an Update-FC DLLP (step S107) if one of the following conditions is met (YES in step S105 or YES in step S106) :

$$P1 = Q1$$

$$P2 \leqq Q2$$

The UpdateFC DLLP is transmitted to the device at the other end. After that, the unit 31 initializes the numbers Q1 and Q2 to set them to zero (step S102).

The flow control unit 31 manages the size of the processed header and that of the processed data based on the size of each of the header and data included in the packet actually output from the receiving buffer 101. When at least one of the sizes of the processed header and data reaches a reference value, the unit 31 generates an UpdateFC DLLP. A credit can thus be transmitted to a transmitting device at the optimum timing before the transmitting device becomes short of credits. The occupation of a band due to a large number of UpdateFC DLLPs can be prevented, as can be the shortage of credits in the transmitting device. Since the flow control of the unit 31 distinguishes a header from data, the receiving buffer can be prevented from being occupied by packets including data of large size. Consequently, the receiving buffer does not overflow, but both a packet including only the header and a packet including both the header and data can be transmitted with efficiency.

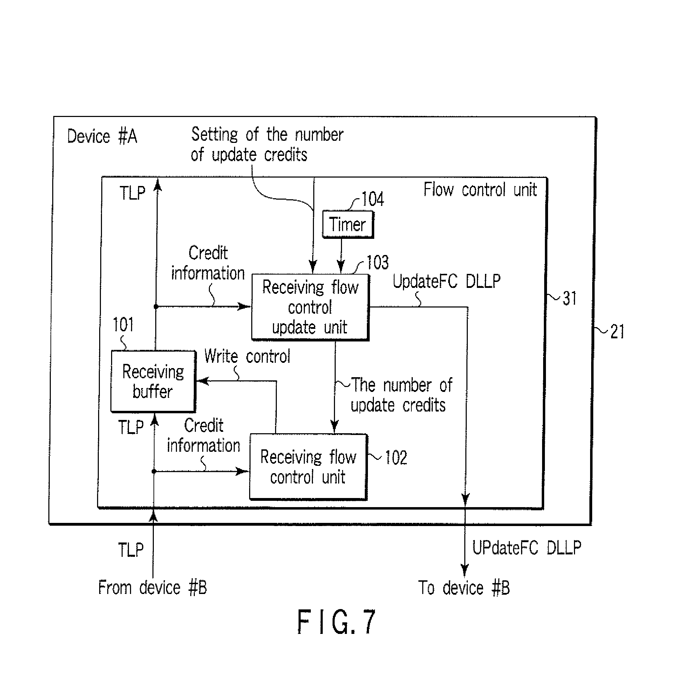

FIG. 7 is a block diagram showing another configuration of the flow control unit 31. The unit 31 includes a timer 104 in addition to the components shown in FIG. 3. The timer 104 measures time elapsed from the last transmission of flow control information. The receiving flow control update unit 103 manages the timing of generation of an UpdateFC DLLP using the number Q1 of processed credits for header and the number Q2 of processed credits for data and the time measured by the timer 104 in order to prevent an UpdateFC DLLP from being not generated for a long time.

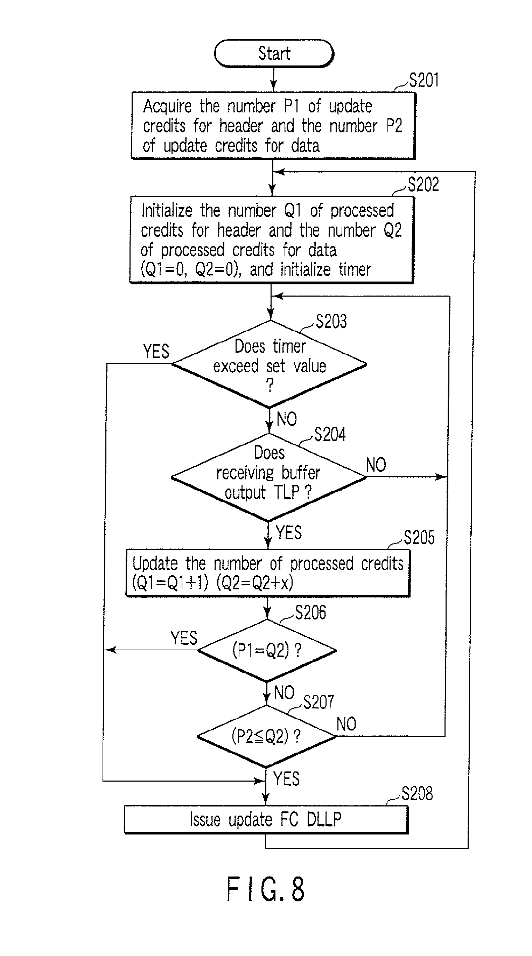

FIG. 8 is a flowchart illustrating an operation of the flow control unit 31 shown in FIG. 7. First, the unit 31 acquires the number P1 of update credits for header and the number P2 of update credits for data from software (step S201). These numbers P1 and P2 are held in, e.g., a register in the unit 31 and used as reference values to determine the timing of generation of an UpdateFC DLLP. Then, the unit 31 initializes the numbers Q1 and Q2 to set them to zero (step S202). In this step S202, the timer 104 is initialized, too. The transaction layer of the device (#A) 21 reads TLPs in sequence from the head of the receiving buffer 101 to process the TLPs. Consequently, read/write access is gained to the memory and register in the device (#A) 21.

The flow control unit 31 determines whether the value of the timer 104 exceeds a preset value (whether a timeout occurs) (step S203). If a timeout occurs (YES in step S203), the unit 31 generates flow control information including the number of update header credits and that of update data credits as an UpdateFC DLLP (step S207). These numbers are generated based on the current values of the numbers Q1 and Q2. After that, the unit 31 returns to step S202 to initialize the numbers Q1 and Q2 and the timer 104.

If the value of the timer 104 does not exceed the preset value (NO in step S203), the flow control unit 31 determines whether the receiving buffer 101 outputs a TLP (step S204). If the receiving buffer 101 outputs a TLP (YES in step S204), the unit 31 updates the numbers Q1 and Q2 based on the number of credits of each of the header and data included in the TLP (step S205). The number Q1 is incremented by one, and the number Q2 is incremented by the number of credits of the data included in the TLP. If the TLP includes no data, the number Q2 is not updated.

The flow control unit 31 generates flow control information including the number of update header credits and the number of update data credits as an Update-FC DLLP (step S208) if one of the following conditions is met (YES in step S206 or YES in step S207) :

$$P1 = Q1$$

$$P2 \leqq Q2$$

After that, the unit 31 returns to step S202 to initialize the numbers Q1 and Q2 and the timer 104.

When the number of TLPs transmitted from the transmitting device is relatively small, neither the number Q1 nor the number Q2 increases easily. There is a case where neither of the above conditions (P1 = Q1 and P2 $\leqq$ Q2) is satisfied or no UpdateFC DLLP is transmitted for a long time. The transmitting device cannot determine whether an error occurs in the receiving device or whether the transmitting device fails to receive an UpdateFC DLLP from the receiving device. The situation in which no UpdateFC DLLP is transmitted for a long time is not favorable to the reliability of operations. The use of the timer 104 in the flow control unit 31 shown in FIG. 7 allows the upper limit of a time period during which no UpdateFC DLLP is transmitted to fall within a given range and makes it possible to prevent the above situation from occurring.

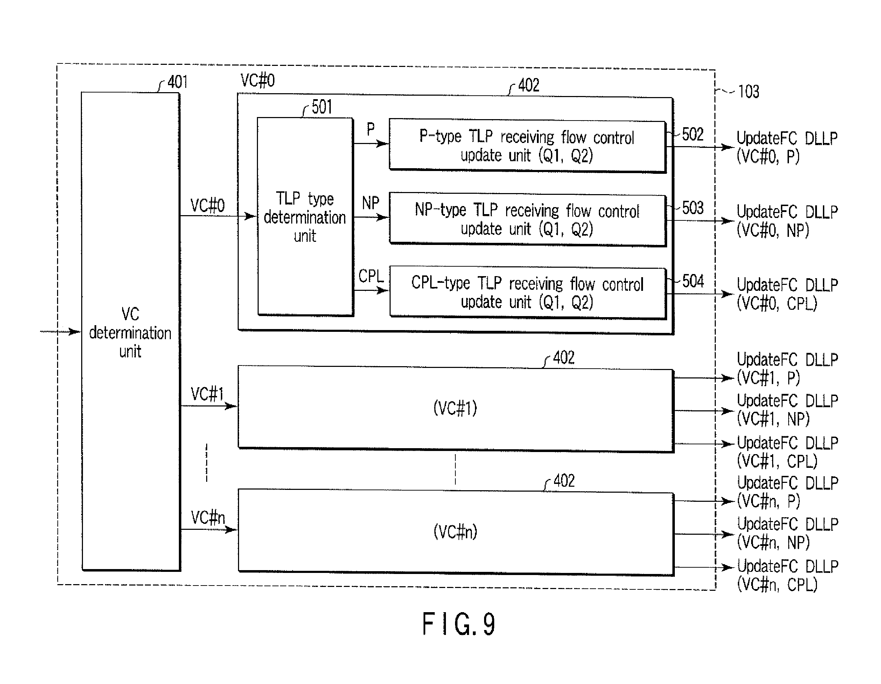

Another configuration of the receiving flow control update unit 103 provided in the flow control unit 31 shown in FIG. 3 or FIG. 7 will be described with reference to FIG. 9.

The receiving flow control update unit 103 shown in FIG. 9 distinguishes the following three TLP types for each virtual channel.

Posted Request (P):

This TLP is a request packet that need not be returned from the receiving device. For example, a memory write request packet is the posted request.

Non-posted Request (NP):

This TLP is a request packet that needs to be returned from the receiving device. For example, a read request packet, an I/O write request packet and a configuration request packet are all non-posted requests.

Completion (CPL):

This TLP is a return packet that is associated with a corresponding non-posted request. For example, a packet for transmitting read data and a packet for transmitting acknowledgement are completion packets.

The flow control of the receiving flow control update unit 103 distinguishes a header from data for each of the TLP types. In the flow control, therefore, the following six types are managed for each virtual channel:

Header (PH) of posted request (P)

Data (PD) of posted request (P)
Header (NPH) of non-posted request (NP)
Data (NPD) of non-posted request (NP)
Header (CPLH) of completion (CPL)
Data (CPLD) of completion (CPL)

The receiving flow control update unit 103 includes a virtual channel determination unit 401 and n receiving flow control update modules 402 corresponding to a plurality of virtual channels (VC#0, VC#1, ... VC#n). These virtual channels are established on the PCI EXPRESS link 30. The flow control is carried out independently for each of the virtual channels.

The header of each TLP includes an identifier (TC: traffic class) for identifying a virtual channel corresponding to the TLP. The virtual channel determination unit 401 determines a virtual channel number (VC#0, VC#1, ..., VC#n) corresponding to a TLP output from the receiving buffer 101 based on the TC included in the header of the TLP. Information on the TLP of VC#0 is processed by its corresponding receiving flow control update module 402 for VC#0, information on the TLP of VC#1 is processed by its corresponding receiving flow control update module 402 for VC#1, and information on the TLP of VC#n is processed by its corresponding receiving flow control update module 402 for VC#n.

Each of the receiving flow control update modules 402 includes a TLP type determination unit 501, a P-type (posted request) TLP receiving flow control update unit 502, an NP-type (non-posted request) TLP receiving flow control update unit 503 and a CPL-type (completion) TLP receiving flow control update unit 504. Each of the modules 402 counts the number Q1 of processed credits for header and the number Q2 of processed credits for data for each of the P, NP and CPL types.

Based on the TLP type identification information included in the header of the TLP of a virtual channel, the TLP type determination unit 501 determines which of the P, NP and CPL types the TLP is. Information on a P-type TLP is processed by the unit 502, information on an NP-type TLP is processed by the unit 503, and information on a CPL-type TLP is processed by the unit 504. The units 502, 503 and 504 each have the configuration illustrated in FIG. 4. They also each include a timer 104 and manage the timing of generation of an UpdateFC DLLP using the numbers Q1 and Q2 and the value of the timer 104.

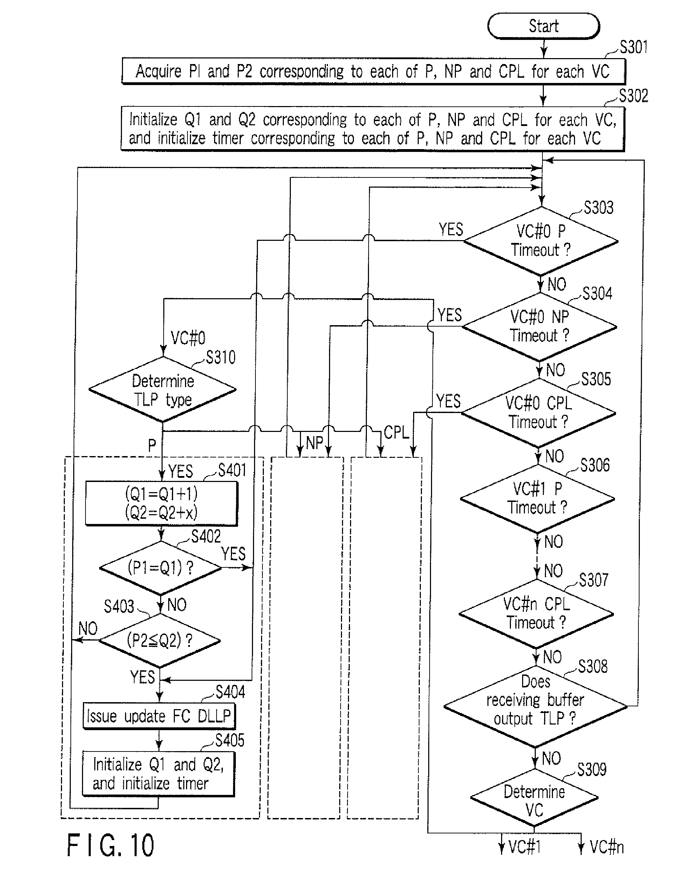

An operation of the receiving flow control update unit 103 shown in FIG. 9 will be described with reference to the flowchart shown in FIG. 10.

First, the unit 103 acquires the number P1 of update credits for header and the number P2 of update credits for data corresponding to each of the P, NP and CPL types from software for each of the virtual channels (VC) (step S301). These numbers P1 and P2 are held in, e.g., a register in the unit 103 and used as reference values for determining the timing of generation of an UpdateFC DLLP. Then, the unit 103 initializes the numbers Q1 and Q2 to set them to zero (step S302). In step S302, the unit 103 also initializes the timer 104 corresponding to each of the P, NP and CPL types for each of the virtual channels (VC). The timer 104 is provided for each of combinations of the virtual channels (VC) and the TLP types.

The receiving flow control update unit 103 determines whether the value of the timer 104 exceeds a preset value (whether a timeout occurs) (steps S303 to S307). If the value of the timer 104 does not exceed the preset value, the unit 103 determines whether the receiving buffer 101 outputs a TLP (step S308). If the receiving buffer 101 outputs a TLP (YES in step 308), the unit 103 determines a virtual channel number corresponding to the TLP (step S309). The virtual channel number is determined by the value of a TC included in the header of the TLP. After that, the unit 103 determines which of the P, NP and CPL types the TLP output from the receiving buffer 101 is (step S310). The following process is performed for each of the P, NP and CPL types. Assume here that the virtual channel number of the TLP output from the receiving buffer 101 is VC#0 and the type thereof is P.

The receiving flow control update unit 103 updates the numbers Q1 and Q2 based on the number of credits of each of the header and data included in the P-type TLP output from the receiving buffer 101 (step S401). The number Q1 is incremented by one, and the number Q2 is incremented by the number of credits of the data included in the P-type TLP. If the P-type TLP includes no data, the number Q2 is not updated.

The receiving flow control update unit 103 generates flow control information including the number of update header credits indicative of the number of credits of the header of a receivable P-type TLP and the number of update data credits indicative of the number of credits of the data of the receivable P-type TLP as an UpdateFC DLLP (step S404) if one of the following conditions is met (YES in step S402 or YES in step S403):

$$P1 = Q1$$

$$P2 \leqq Q2$$

The UpdateFC DLLP includes a virtual channel number and a TLP type (= P). After that, the unit 103 initializes the numbers Q1 and Q2 corresponding to the type P and the timer 104 corresponding to a combination of the virtual channel number VC#0 and the type P (step S405).

Even though a timeout of the timer 104 corresponding to the combination of the virtual channel number VC#0 and the type P occurs (YES in step S303), the receiving flow control update unit 103 generates flow control information including the number of update header credits indicative of the number of credits of the header of a receivable P-type TLP and the number of update data credits indicative of the number of credits of the data of the receivable P-type TLP as an UpdateFC DLLP (step S404). The UpdateFC DLLP includes a virtual channel number and a TLP type (= P). After that, the unit 103 initializes the numbers Q1 and Q2 corresponding to the type P and the timer 104 corresponding to the combination of the virtual channel number VC#0 and the type P (step S405).

As described above, the flow control for each of the TLP types can prevent the receiving buffer from being occupied by a specific-type TLP, with the result that the TLPs of all the types can be transmitted with efficiency.

The functions of the flow control of the embodiment can also be carried out by software.

## Claims

1. A data processing apparatus **characterized by** comprising:

   a first device (22);
   a second device (21) which communicates with the first device (22);
   a receiving buffer (101) which is provided in the second device (21) and holds packets transmitted from the first device (22), each of the packets being either one packet including a header and variable-length data or an another packet including a header and not data;
   a counting unit (202, 203) which is provided in the second device (21) and counts a first value indicative of a size of a processed header and a second value indicative of a size of processed data based on a size of each of a header and data included in each of the packets output from the receiving buffer (101); and
   a flow control information transmission unit (205, 206) which is provided in the second device (21) and transmits flow control information, which indicates a size of each of a header and data that are receivable by the second device (21), to the first device (22) when the first value or the second value reaches a corresponding reference value.

2. The data processing apparatus according to claim 1, **characterized in that** the counting unit (202, 203) counts the first value and the second value in units of credit of a given size.

3. The data processing apparatus according to claim 1, **characterized in that** the apparatus further comprises a timer (104) which measures time elapsed from last transmission of the flow control information, and

the flow control information transmission unit (205, 206) is configured to transmit the flow control information to the first device (22) when one of a condition that the first value or the second value reaches the corresponding reference value and a condition that the elapsed time reaches a given time is met.

4. The data processing apparatus according to claim 1, **characterized in that** the apparatus further comprises a unit (501) which is provided in the second device (21) and determines which of a posted request packet, a non-posted request packet and a completion packet each of the packets output from the receiving buffer (101) is, and

the counting unit (202, 203) is configured to count the first value and the second value for each of the posted request packet, non-posted request packet and completion packet.

5. A device that communicates with another device, **characterized by** comprising:

a receiving buffer (101) which holds packets transmitted from said another device, each of the packets being either one packet including a header and variable-length data or an another packet including a header and not data;
a counting unit (202, 203) which counts a first value indicative of a size of a processed header and a second value indicative of a size of processed data based on a size of each of a header and data included in each of the packets output from the receiving buffer (101); and
a flow control information transmission unit (205, 206) which transmits flow control information, which indicates a size of each of a receivable header and data, to said another device when the first value or the second value reaches a corresponding reference value.

6. The device according to claim 5, **characterized in that** the device further comprises a timer (104) which measures time elapsed from last transmission of the flow control information, and

the flow control information transmission unit (205, 206) is configured to transmit the flow control information to said another device when one of a condition that the first value or the second value reaches the corresponding reference value and a condition that the elapsed time reaches a given time is met.

7. The device according to claim 5, **characterized in that** the device further comprises a unit (501) which determines which of a posted request packet, a non-posted request packet and a completion pack-

et each of the packets output from the receiving buffer (101) is, and

the counting unit (202, 203) is configured to count the first value and the second value for each of the posted request packet, non-posted request packet and completion packet.

8. A method of performing flow control to control a flow of packets from a first device (22) to a receiving buffer (101) provided in a second device (21), each of the packets either one packet including a header and variable-length data or an another packet including a header and not data, the method **characterized by** comprising:

counting a first value indicative of a size of a processed header and a second value indicative of a size of processed data based on a size of each of a header and data included in each of the packets output from the receiving buffer (101); and
transmitting flow control information indicative of a size of each of a header and data that are receivable by the second device (21) from the second device (21) to the first device (22) when the first value or the second value reaches a corresponding reference value.

9. The method according to claim 8, **characterized in that** the method further comprises measuring time elapsed from last transmission of the flow control information, and

the transmitting includes transmitting the flow control information from the second device (21) to the first device (22) when one of a condition that the first value or the second value reaches the corresponding reference value and a condition that the elapsed time reaches a given time is met.

10. The method according to claim 8, **characterized in that** the method further comprises determining which of a posted request packet, a non-posted request packet and a completion packet each of the packets output from the receiving buffer (101) is, and

the counting includes counting the first value and the second value for each of the posted request packet, non-posted request packet and completion packet.

CPU ~11

13

Main memory

~12 PCI
Host bridge Express

14

Graphics
controller

30

30~ PCI Express

15~

I/O controller

HDD ~16

30~

PCI
Express

30~ PCI
Express

17~ I/O device

I/O device ~18

Data processing
apparatus ~1

# FIG. 1

Device #A ~21

Flow control unit ~31

~30

Flow control unit ~32

Device #B ~22

# FIG. 2

Device #A    Setting of the number
             of update credits

TLP ↑                                    Flow control unit

        Credit                    ⌐103
        information          Receiving flow        UpdateFC DLLP
                             control               
                             update unit                        ~31
                                                                     ~21
   101
      Receiving    Write control
      buffer ←
                            The number of
TLP ↑    Credit             update credits
         information   Receiving flow  ~102
                       control unit

TLP                                      UPdateFC DLLP

From device #B         F I G. 3      To device #B

---

Credit                              202              204
information              201     Counter
                              ⌐   (Q1)          Update
        Header/data              ┌─           credit number
        credit number            │            generator
        detector                 Counter
                                 (Q2)
                                     203
                                     Update FC DLLP        UpdateFC
                                     issuer               DLLP

        Receiving flow control unit
                                        205

                                  103

             F I G. 4

| TLP | Header | Data (0~4KB) |
|-----|--------|--------------|

## F I G. 5

Start

Acquire the number P1 of update credits for header and the number P2 of update credits for data — S101

Initialize the number Q1 of processed credits for header and the number Q2 of processed credits for data (Q1=0, Q2=0) — S102

Does receiving buffer output TLP ? — S103
NO

YES

Update the number of processed credits (Q1=Q1+1) (Q2=Q2+x) — S104

(P1=Q1) ? — S105
YES
NO

(P2≦Q2) ? — S106
NO

YES

Issue update FC DLLP — S107

## F I G. 6

Device #A    Setting of the number
             of update credits

TLP                                      Flow control unit
                          ┌─104
                          | Timer |

    Credit                    ┌─103        UpdateFC DLLP
    information      Receiving flow
                     control                              ~31
                     update unit
101                                                       ~21
      Write control
 Receiving
 buffer                        ~The number of
                               update credits
 TLP    Credit
        information    Receiving flow    ~102
                      control unit

 TLP                                  UPdateFC DLLP

From device #B                        To device #B

F I G. 7

Start

S201
Acquire the number P1 of update credits for header and the number P2 of update credits for data

S202
Initialize the number Q1 of processed credits for header and the number Q2 of processed credits for data ($Q1=0$, $Q2=0$), and initialize timer

S203
Does timer exceed set value ?

YES

NO

S204
Does receiving buffer output TLP ?

NO

YES

S205
Update the number of processed credits ($Q1=Q1+1$) ($Q2=Q2+x$)

S206
($P1=Q2$) ?

YES

NO

S207
($P2\leqq Q2$) ?

NO

YES

S208
Issue update FC DLLP

F I G. 8

13

VC#0

401

402

VC#0

501

P ──→ P-type TLP receiving flow control update unit (Q1, Q2) ──502──→ UpdateFC DLLP (VC#0, P)

VC determination unit

VC#0 ──→ TLP type determination unit

NP ──→ NP-type TLP receiving flow control update unit (Q1, Q2) ──503──→ UpdateFC DLLP (VC#0, NP)

CPL ──→ CPL-type TLP receiving flow control update unit (Q1, Q2) ──504──→ UpdateFC DLLP (VC#0, CPL)

402

VC#1 ──→ (VC#1) ──→ UpdateFC DLLP (VC#1, P)

UpdateFC DLLP (VC#1, NP)

UpdateFC DLLP (VC#1, CPL)

402

VC#n ──→ (VC#n) ──→ UpdateFC DLLP (VC#n, P)

UpdateFC DLLP (VC#n, NP)

UpdateFC DLLP (VC#n, CPL)

103

F I G. 9

Start

S301

Acquire PI and P2 corresponding to each of P, NP and CPL for each VC

S302

Initialize Q1 and Q2 corresponding to each of P, NP and CPL for each VC, and initialize timer corresponding to each of P, NP and CPL for each VC

S303
VC#0 P Timeout ?  — YES
NO

S304
VC#0 NP Timeout ?  — YES
NO

S305
VC#0 CPL Timeout ?  — YES
NO

S306
VC#1 P Timeout ?
NO

NO

S307
VC#n CPL Timeout ?
NO

S308
Does receiving buffer output TLP ?
NO

S309
Determine VC

VC#0

S310
Determine TLP type

P          NP          CPL

YES     S401
(Q1=Q1+1)
(Q2=Q2+x)

S402
(P1=Q1) ?  — YES

S403
NO
(P2≦Q2) ?  — NO

YES

S404
Issue update FC DLLP

S405
Initialize Q1 and Q2, and initialize timer

F I G. 10

↓VC#1      ↓VC#n